# EUROPEAN PATENT APPLICATION

(11) **EP 4 141 827 A1**
(43) Date of publication of application: **01.03.2023**
(21) Application number: 21903755.3
(22) Date of filing: 03.12.2021
(51) Int. Cl.: G07C 9/00, G06F 21/31

(54) **ELECTRONIC KEY INTERLOCKED WITH SMART DEVICE**

(30) Priority: 08.12.2020 KR 20200170868; 15.11.2021 KR 20210156539
(71) Applicant: Platformbase Co., Ltd, Suwon-si, Gyeonggi-do 16648 (KR)
(72) Inventor: KIM, Bum Soo, Namyangju-si Gyeonggi-do 12160 (KR)
(74) Representative: Viering, Jentschura & Partner mbB Patent- und Rechtsanwälte
(86) International application number: PCT/KR2021/018227
(87) International publication number: WO 2022/124709

(57) **Abstract**

The present invention relates to an electronic key interlocked with a smart device and an electronic key interlocked with a smart device according to an exemplary embodiment of the present invention includes a first transmission and reception unit which is electrically connected to a smart device to transmit and receive data, a second transmission and reception unit which is electrically connected to an electronic locking device to transmit and receive data, and a power supply unit which is supplied with power from the smart device to supply the power to drive the electronic locking device, and the first transmission and reception unit transmits and receives data for opening and closing the electronic locking device to and from the smart device in accordance with a result of performing user authentication.

## Description

### [Technical Field]

The present invention relates to an electronic key interlocked with a smart device to operate and a system thereof.

### [Background Art]

The locking device for security installed in doors, lockers, and facilities is classified into a mechanical locking device and an electronic locking device. The mechanical locking device which uses a key to open and close a door or a locker has a problem for a security due to manipulation or storage of the key and a problem in that when the key is lost, the locking device needs to be replaced.

In view of this, an electronic locking device which opens and closes the door using a password, a fingerprint of a user, a voice, or an electronic key is frequently used. Since there is no worry of losing the key, a general user can easily open and close a door or a locker through simple authentication, and the security is excellent so that the market of the electronic locking device is rapidly growing in recent years.

However, in order to use the electronic locking device, a battery and a communication module are mounted in the electronic key so that there are problems in that a weight of the electronic key is increased and the cost is increased.

Accordingly, there is a growing need for an electronic key interlocked with the smart device to compensate for the shortcomings of the existing electronic key.

### [Disclosure]

### [Technical Problem]

A technical object to be achieved by the present invention is to provide an electronic key interlocked with a smart device and a system thereof.

Technical objects of the present invention are not limited to the aforementioned technical objects and other technical objects which are not mentioned will be apparently appreciated by those skilled in the art from the following description.

In order to achieve the above-described technical objects, according to an aspect of the present invention, an electronic key interlocked with a smart device includes a first transmission and reception unit which is electrically connected to a smart device to transmit and receive data, a second transmission and reception unit which is electrically connected to an electronic locking device to transmit and receive data, and a power supply unit which is supplied with power from the smart device to supply the power to drive the electronic locking device, and the first transmission and reception unit transmits and receives data for opening and closing the electronic locking device to and from the smart device in accordance with a result of performing user authentication.

According to one exemplary embodiment, when the user authentication is completed, the first transmission and reception unit receives unique identification data of the smart device and the second transmission and reception unit transmits unique identification data of the smart device to the electronic locking device.

According to one exemplary embodiment, the unique identification data of the smart device is any one of UID data, one-time UID data, and one-time authentication data.

According to one exemplary embodiment, the first transmission and reception unit transmits a history regarding a result of attempt to unlock the electronic locking device to the smart device.

According to one exemplary embodiment, the user authentication is performed by password authentication or bio authentication by means of the smart device.

According to another aspect of the present invention, an unlocking system of an electronic locking device includes an electronic key which locks and unlocks an electronic locking device; and a smart device which performs the user authentication and is electrically connected to the electronic key to transmit and receive data to control the opening/closing of the electronic locking device according to an authentication result.

According to one exemplary embodiment, when the user authentication is completed, the smart device transmits unique identification data of the smart device to the electronic key and the electronic key transmits the received unique identification data of the smart device to the electronic locking device.

According to one exemplary embodiment, the smart device performs authentication for opening and closing the electronic locking device based on a list in which unique identification data of the electronic locking device received from the electronic key and unique identification data of the electronic locking device which is unlockable with the smart device are recorded.

According to one exemplary embodiment, the smart device and the electronic key are connected by means of any one of a USB cable and a lightning cable.

According to one exemplary embodiment, an unlocking system of an electronic locking device further includes a management server which generates one-time password generated using a one-time password generating program synchronized with the electronic locking device to transmit the one-time password to the smart device, and the smart device uses the one-time password as unique identification data of the smart device.

### [Advantageous Effects]

When an electronic device proposed by the present invention is used, the smart device is used together so that the battery and the communication module are removed from the electronic key while maintaining the convenience and the excellent security of the existing electronic key, thereby reducing a weight of the electronic key and lowering the cost.

The effects of the present invention are not limited to the technical effects mentioned above, and other effects which are not mentioned can be clearly understood by those skilled in the art from the following description

### [Description of Drawings]

FIG. 1 is a block diagram schematically illustrating a configuration of an unlocking system of an electronic locking device according to an exemplary embodiment of the present invention.
FIG. 2 is a block diagram schematically illustrating a configuration of an unlocking system of an electronic locking device according to another exemplary embodiment of the present invention.
FIG. 3 is a block diagram illustrating an electronic key interlocked with a smart device according to an exemplary embodiment of the present invention.
FIG. 4 is a view illustrating a shape of an electronic key 100 interlocked with a smart device according to an exemplary embodiment of the present invention.
FIG. 5 is a block diagram illustrating a smart device interlocked with an electronic key according to an exemplary embodiment of the present invention.
FIG. 6 is a block diagram illustrating a configuration of a management server according to an exemplary embodiment of the present invention.

### [Best Mode]

Those skilled in the art may make various modifications to the present invention and the present invention may have various exemplary embodiments, and thus specific embodiments will be illustrated in the drawings and described in detail in the detailed description. However, it should be understood that the invention is not limited to the specific embodiments, but includes all changes, equivalents, or alternatives which are included in the spirit and technical scope of the present invention. In the description of respective drawings, similar reference numerals designate similar elements.

Terms such as first, second, A, or B may be used to describe various components but the components are not limited by the above terms. The above terms are used only to discriminate one component from another component. For example, without departing from the scope of the present invention, a first component may be referred to as a second component, and similarly, a second component may be referred to as a first component. A term of and/or includes a combination of a plurality of related elements or any one of the plurality of related elements.

If it is not contrarily defined, all terms used herein including technological or scientific terms have the same meaning as those generally understood by a person with ordinary skill in the art. Terms defined in generally used dictionaries shall be construed that they have meanings matching those in the context of a related art, and shall not be construed in ideal or excessively formal meanings unless they are clearly defined in the present application.

Hereinafter, exemplary embodiments according to the present invention will be described in detail with reference to accompanying drawings.

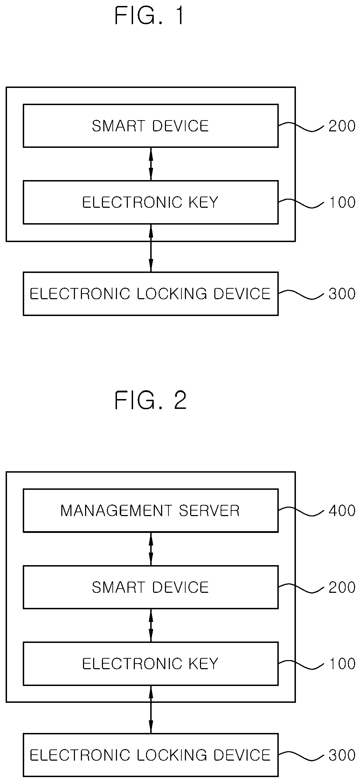

FIG. 1 is a block diagram schematically illustrating a configuration of an unlocking system of an electronic locking device according to an exemplary embodiment of the present invention.

Referring to FIG. 1, the unlocking system of the electronic locking device may include an electronic key 100 and a smart device 200.

The electronic key 100 refers to a key which locks or unlocks the electronic locking device 300.

Further, the electronic key 100 may transmit a history of a result of attempt to unlock the electronic locking device 300 to the connected smart device 200.

Here, the electronic locking device 300 may be any one of a padlock, a Euro profile double, a rim lock, a drawer lock, and a cam lock.

In an exemplary embodiment, the electronic locking device 300 stores unique UID (unique ID) as unique identification data.

In an exemplary embodiment, the electronic key 100 is electrically connected to the electronic locking device 300 to transmit and receive data for controlling the opening and closing of the electronic locking device 300 to and from the electronic locking device 300. For example, the electronic key 100 transmits unique identification data from the electronic locking device 300.

The smart device 200 is an electronic device which is electrically connected to the electronic key 100 to request the locking or unlocking of the electronic key or display a history transmitted from the electronic key 100. To this end, in the smart device 200, an application for displaying the unlocking and the history of the electronic key 100 may be installed.

The smart device 200 may be implemented as an electronic device which performs the communication, receives an input of the user, and outputs a screen or a similar device thereto, such as a smart phone, a tablet, a notebook PC, a desktop PC, and a wearable device.

In one exemplary embodiment, the smart device 200 may perform user authentication. The user authentication of the smart device 200 may be performed by password authentication or bio authentication by means of the smart device 200. For example, the user may perform the authentication by inputting a password including letters, numbers, and symbols or inputting bio signals using fingerprint, voice, face, or vein to an application which is being executed in the smart device 200. To this end, the smart device 200 may include any one or more of a keyboard for inputting a password, a microphone for inputting voice, a camera for recognizing a face, and/or a sensor for recognizing bio information.

The smart device 200 transmits and receives data for controlling the opening/closing of the electronic locking device 300 to and from the electronic key 100 according to the user authentication result. In one exemplary embodiment, the smart device 200 transmits and receives data for controlling the opening/closing of the electronic locking device 300 to and from the electronic key 100 when the user authentication is completed.

In one exemplary embodiment, the electronic key 100 transmits received unique identification data of the smart device to the electronic locking device 300.

For example, the smart device 200 may receive unique identification data of the electronic locking device 300 transmitted from the electronic key 100 or transmit unique identification data of the smart device 200.

The smart device 200 may perform the authentication to open/close the electronic locking device 300, based on a list in which unique identification data of the electronic locking device received from the electronic key 100 and unique identification data of an unlockable electronic locking device 300 which is stored in advance in the smart device are recorded. In an exemplary embodiment, when the unique identification data of the electronic locking device 300 received from the electronic key 100 is included in the list to complete the authentication, the smart device 200 may transmit a signal for opening/closing the electronic locking device 300 to the electronic key 100.

The smart device 200 may receive and output a history regarding a result of attempt to unlock the electronic locking device 300 from the electronic key 100.

FIG. 2 is a block diagram schematically illustrating a configuration of an unlocking system of an electronic locking device according to another exemplary embodiment of the present invention.

Referring to FIG. 2, the unlocking system of the electronic locking device may include an electronic key 100, a smart device 200, and a management server 400.

The electronic key 100 and the smart device 200 include the functions described with reference to FIG. 1, so that a difference will be mainly described while omitting the detailed description.

In one exemplary embodiment, the smart device 200 may communicate with a remote management server 400.

In an exemplary embodiment, the smart device 200 may transmit a history for user authentication and/or a history regarding a result of attempt to unlock the electronic locking device received from the electronic key to the management server 400.

The management server 400 receives and stores information related to the electronic key 100 (for example, a history regarding a result of attempt to unlock the electronic device 300) from the plurality of smart devices 200 via a communication network. Further, the management server 400 may also store information regarding unique identification data and a location of the electronic locking device 300. Specifically, the management server 400 may search and delete the stored information in response to the request of the smart device 200 and assign one-time unlocking right to the electronic key.

In one exemplary embodiment, the management server 400 may identify a location of one or more electronic locking devices 300 and a current state (including locking or unlocking) of the electronic locking device 300 and display the location and the current state on a display device. The management server 400 may display the location of the electronic locking device 300 on the map. Further, the management server 400 may display the current state of the electronic locking device 300 with different colors. For example, the management server 400 may display the current locked state with a first color and an unlocked state with a second color.

In one exemplary embodiment, the management server 400 may set a condition unlocking right of the electronic locking device 300 of the smart device 200. For example, the management server 400 may set any one or more conditions of date, time, and day of the week to the list in which unique identification data of the unlockable electronic locking device 300 stored in advance in a smart device having a right is recorded. Accordingly, only when the condition set in the list is satisfied, the smart device 200 may transmit and receive data for unlocking the electronic locking device 300.

In one exemplary embodiment, when the management server 400 and the electronic locking device 300 store a synchronized one-time password generating program, the electronic locking device 300 may be unlocked using one-time password, instead of the unique identification data of the smart device. To this end, when the smart device 200 requests the management server 400 one-time password, the management server 400 generates one-time password to transmit the one-time password to the smart device 200. Thereafter, when the smart device 200 transmits the one-time password to the electronic locking device 300 by means of the electrically connected electronic key, the electronic locking device 300 is locked or unlocked depending on whether one-time password generated by the synchronized one-time password generating program and one-time password transmitted through the electronic key match.

The management server 400 may be implemented as an electronic device which performs communication, such as a workstation, a server, and a general computer, or a similar device thereto.

The communication network may be implemented using at least some of communication methods which were developed in the past, have been developed in the present time, or will be available in the future such as long term evolution (LTE), LTE-Advanced (LTE-A), WI-FI, local area network (LAN), wide area network (WAN), code division multiple access (CDMA), time division multiple access (TDMA), wireless broadband (WiBro), and global system for mobile communications (GSM). Hereinafter, for the sake of convenience, it will be described that components directly communicate with each other, without mentioning the communication network.

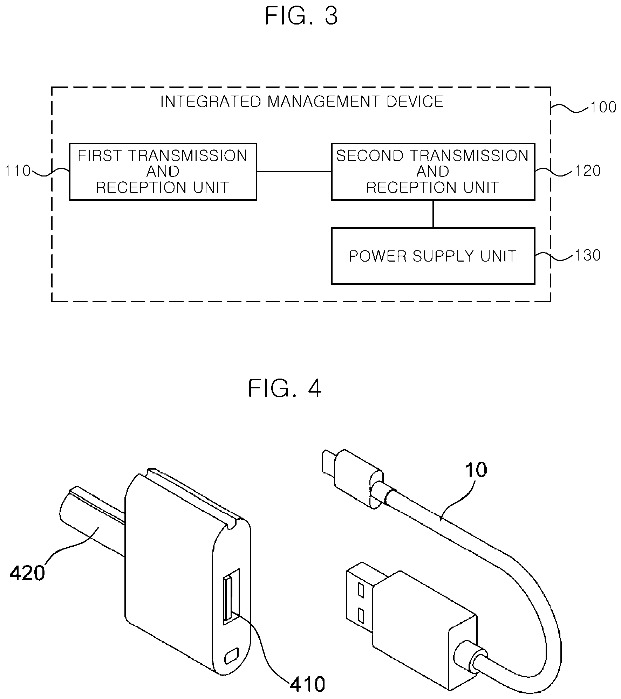

FIG. 3 is a block diagram illustrating an electronic key interlocked with a smart device according to an exemplary embodiment of the present invention.

Referring to FIG. 3, the electronic key 100 which is interlocked with the smart device according to the exemplary embodiment of the present invention includes a first transmission and reception unit 110, a second transmission and reception unit 120, and a power supply unit 130.

The first transmission and reception unit 110 is electrically connected to the smart device 200 to transmit and receive data.

For example, the first transmission and reception unit 110 may receive unique identification data which is any one of UID data, one-time UID data, and one-time authentication data for unlocking the electronic locking device 300 from the smart device 200. At this time, the UID is an ID which is uniquely assigned to the smart device and includes IMEI, MAC address, Bluetooth address, and the like. Further, one-time UID data and one-time authentication data may be transmitted from the management server to the smart device 200 to unlock the electronic locking device 300 for one-time.

Further, the first transmission and reception unit 110 transmits unique UID data of the electronic locking device 300 to the smart device 200 to perform the authentication in the smart device 200.

Further, the first transmission and reception unit 110 may transmit a history regarding a result of attempt to unlock the electronic locking device 300 to the smart device 200. Moreover, the smart device 200 may transmit the history to the management server to allow the management server to manage the unlocking history of the electronic locking device 300.

The second transmission and reception unit 120 is electrically connected to the electronic locking device 300 to transmit and receive data.

For example, the second transmission and reception unit 120 transmits unique identification data of the smart device 200 to the electronic locking device 300 to perform the authentication for the electronic key 100 in the electronic locking device 300.

Further, the second transmission and reception unit 120 may receive the unique UID data of the electronic locking device 300 from the electronic locking device 300. At this time, the UID data of the electronic locking device 300 may be used to perform the authentication in the smart device 200. To be more specific, the smart device 200 may perform the authentication using the UID data of the electronic locking device 300 and the UID data list of the electronic locking device 300 which is unlockable with the smart device 200. The UID list of the electronic locking device 300 which is unlockable with the smart device 200 includes UID data of one or more unlockable electronic locking devices 300 and is received from the management server 400 to be stored in the smart device 200.

Further, the second transmission and reception unit 120 may receive a history regarding a result of attempt to unlock the electronic locking device 300 from the electronic locking device 300.

That is, the electronic locking device 300 attempts the authentication using UID data, one-time UID data, and one-time authentication data of the smart device 200 and then unlocks the locking according to the authentication result. To be more specific, the electronic locking device 300 employs a blacklist or whitelist method to perform the authentication for UID data, one-time UID data, and one-time authentication data of the smart device 200.

The blacklist is a list in which unique identification data of the smart device 200 without having a right due to the loss of the electronic key 100 is recorded and the whitelist is a list in which unique identification data of the smart device 200 having an unlocking right of the electronic locking device 300 is recorded.

The first transmission and reception unit 110 and the second transmission and reception unit 120 may be configured to transmit data which is received from one of them to the other one. For example, data received from the smart device 200 by the first transmission and reception unit 110 is transmitted to the second transmission and reception unit 120 so that the second transmission and reception unit 120 may transmit the data to the electronic locking device 300.

The power supply unit 130 is supplied with power from the smart device 200 to supply the power to the electronic locking device 300.

That is, the power supply unit 130 is electrically connected to the smart device 200 to be supplied with the power and temporally supplies the power to the electronic locking device 300 while electrically being connected to the electronic locking device. The electronic locking device 300 performs the authentication for the electronic key 100 and unlocks the locking using the supplied power.

At this time, according to the result of performing the user authentication in the smart device 200, the electronic locking device 300 may be open or closed.

For example, when the user authentication is completed in an application which is being executed in the smart device 200, the application of the smart device 200 transmits unique identification data of the smart device 200 to the electronic key 100 by means of the first transmission and reception unit 110 and the electronic key 100 transmits the unique identification data to the electronic locking device 300 by means of the second transmission and reception unit 120.

In contrast, when the user authentication is not completed in an application which is being executed in the smart device 200, the application of the smart device 200 does not transmit the unique identification data of the smart device 200 by means of the first transmission and reception unit 110 so that the electronic locking device 300 is not unlocked.

At this time, when the unique identification data is included in the whitelist or is not included in the blacklist, the electronic locking device 300 may perform the authentication for the electronic key 100 and unlocked or locked.

In the meantime, the smart device 200 transmits the history for the user authentication to the management server 400 to be stored in the database.

FIG. 4 is a view illustrating a shape of an electronic key 100 interlocked with a smart device according to an exemplary embodiment of the present invention.

At this time, the electronic key 100 includes a first terminal unit 410 connected to the smart device 200 and a second terminal unit 420 connected to the electronic locking device 300.

In one exemplary embodiment, the first terminal unit 410 may be an interface, such as USB or lightning, which is used in the smart device 200, such as a smart phone or a tablet. The first terminal unit 410 is connected to the smart device 200 through a separate cable 10, such as a USB cable or a lightning cable.

The second terminal unit 420 may be formed to have a shape matching a shape of a key which is fastened with the electronic locking device 300.

Here, it is well known to those skilled in the art that in the electronic key 100, the first terminal unit 410 connected to the smart device 200 and the second terminal unit 420 connected to the electronic locking device 300 are not necessarily separated, but may be integrally manufactured.

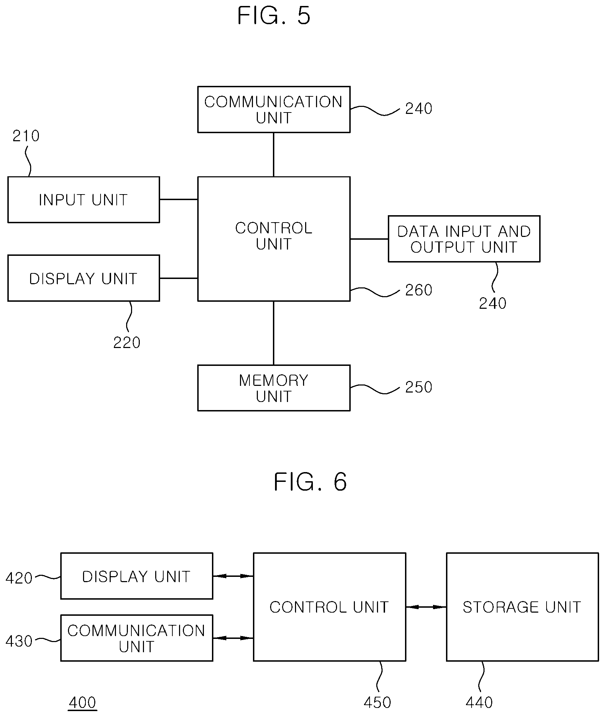

FIG. 5 is a block diagram illustrating a smart device interlocked with an electronic key according to an exemplary embodiment of the present invention.

Referring to FIG. 5, the smart device 200 may include an input unit 210, a display unit 220, a data input and output unit 230, a communication unit 240, a storage unit 250, and a control unit 260.

The input unit 210 converts an input operation of the user into an input signal to transmit the input signal to the control unit 260. The input unit 210 may be implemented by a keyboard, a mouse, a touch sensor on a touch screen, a touch pad, a key pad, voice input, and other input processing devices which were available in the past, have been available in the present time, or will be available in the future.

The display unit 220 outputs the screen in response to the control of the control unit 260. For example, the display unit 220 may be implemented by a liquid crystal display device (LCD), a light emitting diode (LED), an organic light emitting diode (OLED), a projector, and other display devices which were available in the past, have been available in the present time, or will be available in the future. The display unit 220 may display an interface page for providing information or an information providing result page. According to an exemplary embodiment, a configuration which uses another method to transmit information to the user, such as voice output or vibration, instead of screen output, may be used instead of the display unit 220.

The data input and output unit 230 is electrically connected to the external device to input and output data. In one exemplary embodiment, the data input and output unit 230 may be a USB interface. The data input and output unit 230 is electrically connected to the electronic key 100 by means of a USB dedicated cable to exchange the data.

The communication unit 240 exchanges data with the management server 400.

In one exemplary embodiment, the communication unit 240 transmits a one-time authentication ID received from the management server 400 to the control unit 260. Further, the communication unit 240 transmits the data to the management server 400 in response to the control of the control unit 260. A communication technique used by the communication unit 240 may vary depending on a type of a communication network or other circumstances.

The storage unit 250 stores data and transmits the requested data to the control unit 260 in response to the control of the control unit 260. In one exemplary embodiment, the storage unit 250 may store any one or more of a history regarding a result of attempt to unlock the electronic locking device 300, a user authentication history, and password and bio information for user authentication, received from the electronic key 100.

The control unit 260 controls an overall operation and each component of the smart device 200.

In one exemplary embodiment, the control unit 260 may perform user authentication. To this end, the user authentication may be performed depending on whether the password input by means of the input unit 210 or bio information recognized by a recognition unit (not illustrated) matches a predetermined value.

When the smart device 200 transmits and receives data, depending on the viewpoint, it may be expressed that the communication unit 240 transmits and receives data in response to the control of the control unit 260 or the control unit 260 controls the communication unit 240 to transmit and receive data.

As described above, when the smart device 200 transmits and receives data, depending on the viewpoint, it may be expressed that the communication unit 240 transmits and receives data in response to the control of the control unit 260 or the control unit 260 controls the communication unit 240 to transmit and receive data.

FIG. 6 is a block diagram illustrating a configuration of a management server according to an exemplary embodiment of the present invention.

Referring to FIG. 6, the management server 400 may include a display unit 420, a communication unit 430, a storage unit 440, and a control unit 450. In an exemplary embodiment of the present invention, it is disclosed that the management server 400 includes the display unit 420, the communication unit 430, the storage unit 440, and the control unit 450, but some of them may be implemented by a physically separated device. For example, the display unit 420 may be implemented by a separate monitor or an external terminal such as a manager terminal.

The display unit 420 outputs the screen in response to the control of the control unit 450.

For example, the display unit 420 may be implemented by a liquid crystal display device (LCD), a light emitting diode (LED), an organic light emitting diode (OLED), a projector, and other display devices which were possible in the past, have been possible in the present time, or will be possible in the future. The display unit 420 may display an interface page for providing information or an information providing result page. According to an exemplary embodiment, a configuration which uses another method to transmit information to the user, such as voice output or vibration, instead of screen output, may be used instead of the display unit 420.

The display unit 420 may display a previously stored location of the electronic locking device 300 on a map. The display unit 420 displays the location of the electronic locking device 300 and a current state (including locking and unlocking state of the electronic key) of the electronic locking device 300 on the map in real time. The display unit 420 may display the location of the locking device with different colors according to the current state. By doing this, the user may check the map to intuitively identify the location and the current state of the locking device.

The communication unit 430 transmits and receives data with the smart device 200.

In an exemplary embodiment, the communication unit 430 receives a history for user authentication and/or a history regarding a result of attempt to unlock the electronic locking device received from the electronic key from the smart device 200 to transmit the histories to the storage unit 440.

In one exemplary embodiment, the communication unit 430 receives one-time authentication request information from the smart device 200 to transmit the information to the control unit 450. A communication technique used by the communication unit 430 may vary depending on a type of a communication network or other circumstances.

The storage unit 440 stores data and transmits the requested data to the control unit 450 in response to the control of the control unit 450.

The control unit 450 controls an overall operation and each component of the management server 400. Specifically, to be described below, when the control unit 450 transmits a one-time password request message from the smart device 200, one-time password may be generated by a program for generating one-time password which is synchronized with the electronic locking device 300 into which the electronic key 100 in electrically contact with the smart device 200 is inserted. Thereafter, the control unit 450 transmits the generated one-time password to the smart device 200 by means of the communication unit 430.

In one exemplary embodiment, the when the failure of the attempt to unlock the electronic locking device of the smart device 200 connected to the electronic key 100 which is inserted into the electronic locking device 300 to be electrically contacted is transmitted, the control unit 450 changes a color of the location of the electronic locking device 300 to be displayed on the display device. The control unit 450 displays the location of the electronic locking device 300 into which the electronic key 100 connected to the smart device 200 which fails the attempt of the unlocking is inserted to be different from the location of the electronic locking device 300 into which the electronic key 100 is not inserted. For example, the location of the electronic locking device 300 into which the electronic key 100 is not inserted is displayed with a first color (for example, black). The location of the electronic locking device 300 which fails the attempt to unlock may be displayed with red. The electronic locking device 300 displayed with red is selected (by clicking a mouse or touching a touch panel) to assign a right for one-time authentication according to the right of the manager.

The one-time password may be implemented to dissipate the authentication right when the electronic locking device 300 and the electronic key 100 are separated. For example, the one-time authentication ID and one-time authentication data stored in the electronic key 100 and the electronic locking device 300 may be implemented to be deleted after one-time authentication.

In one exemplary embodiment, the control unit 450 may directly set a condition for unlocking or set the condition for unlocking by transmitting information for setting any one or more of the date, the time, and the day of the week of the electronic key 100 to the smart device 200 according to an input through an input unit (not illustrated) for setting authentication right. By doing this, the electronic key 100 may unlock the electronic key only at a timing when the right is set.

The exemplary embodiments of the present invention have been described with reference to the accompanying drawings, but those skilled in the art will understand that the present invention may be implemented in another specific form without changing the technical spirit or an essential feature thereof. Thus, it is to be appreciated that embodiments described above are intended to be illustrative in every sense, and not restrictive.

## Claims

1. An electronic key interlocked with a smart device, comprising:
a first transmission and reception unit which is electrically connected to a smart device to transmit and receive data;
a second transmission and reception unit which is electrically connected to an electronic locking device to transmit and receive data; and
a power supply unit which is supplied with power from the smart device to supply the power to drive the electronic locking device,
wherein the first transmission and reception unit transmits and receives data for opening and closing the electronic locking device to and from the smart device in accordance with a result of performing user authentication.

2. The electronic key interlocked with a smart device of claim 1, wherein when the user authentication is completed, the first transmission and reception unit receives unique identification data of the smart device and the second transmission and reception unit transmits unique identification data of the smart device to the electronic locking device.

3. The electronic key interlocked with a smart device of claim 2, wherein the unique identification data of the smart device is any one of UID data, one-time UID data, and one-time authentication data.

4. The electronic key interlocked with a smart device of claim 1, wherein the first transmission and reception unit transmits a history regarding a result of attempt to unlock the electronic locking device to the smart device.

5. The electronic key interlocked with a smart device of claim 1, wherein the user authentication is performed by password authentication or bio authentication by means of the smart device.

6. An unlocking system of an electronic locking device, comprising:
an electronic key which locks and unlocks an electronic locking device; and
a smart device which performs user authentication and is electrically connected to the electronic key to transmit and receive data to control opening/closing of the electronic locking device according to an authentication result.

7. The unlocking system of an electronic locking device of claim 6, wherein when the user authentication is completed, the smart device transmits unique identification data of the smart device to the electronic key and the electronic key transmits the received unique identification data of the smart device to the electronic locking device.

8. The unlocking system of an electronic locking device of claim 7, wherein the unique identification data of the smart device is any one of UID data, one-time UID data, and one-time authentication data.

9. The unlocking system of an electronic locking device of claim 8, wherein the electronic key transmits a history regarding a result of attempt to unlock the electronic locking device to the smart device.

10. The unlocking system of an electronic locking device of claim 6, wherein the smart device performs authentication for opening and closing the electronic locking device based on a list in which unique identification data of the electronic locking device received from the electronic key and unique identification data of the electronic locking device which is unlockable with the smart device are recorded.

11. The unlocking system of an electronic locking device of claim 6, wherein the user authentication is performed by password authentication or bio authentication by means of the smart device.

12. The unlocking system of an electronic locking device of claim 6, wherein the smart device and the electronic key are connected by means of any one of a USB cable and a lightning cable.

13. The unlocking system of an electronic locking device of claim 6, further comprising:
a management server which generates one-time password generated using one-time password generating program synchronized with the electronic locking device to transmit the one-time password to the smart device,
wherein the smart device uses the one-time password as unique identification data of the smart device.
